# EUROPEAN PATENT APPLICATION

(11) **EP 3 640 104 A1**
(43) Date of publication of application: **22.04.2020**
(21) Application number: 19203910.5
(22) Date of filing: 17.10.2019
(51) Int. Cl.: B60W 30/00, G05D 1/00, G05D 1/02

(54) **SELF-DRIVING WITH ONBOARD CONTROL SYSTEM**

(30) Priority: 17.10.2018 US 201816163548
(71) Applicant: Sham, Wellen, Taipei City (TW)
(72) Inventor: Sham, Wellen, Taipei City (TW)
(74) Representative: Sadler, Peter Frederick

(57) **Abstract**

Embodiments are provided for methods and systems implementing the methods for maneuvering a driving apparatus. The methods may include detecting a first object and a second object. The methods may include detecting distance and/or angle information of the first and/or second objects. The method may further include detecting instruction and/or information provided by the first and/or second objects. The methods may include making a maneuver judgment to maneuver the driving apparatus based on the first and/or second objects such that the driving apparatus may avoid the first and/or second objects, and/or may follow or utilize instruction and/or information provided by the first and/or second objects.

## Description

### BACKGROUND

The present disclosure relates to onboard control systems for a driving apparatus, in particular onboard control systems with preprogrammed judgments for maneuvering the driving apparatus, such as an autonomous vehicle.

Autonomous vehicles, also known as driverless vehicles, are vehicles without a human operator onboard. The operation of an autonomous vehicle may be controlled by an onboard control system. Such onboard control system may include cameras for capturing images of objects in front the vehicle. The captured images may be processed by the onboard control system to determine whether the operation of the vehicle may be adjusted. The image processing typically involves line-by-line or pixel-by-pixel image analysis. Such processing can be time-consuming and can take up computing resources of the onboard control system. This further limits the applicability of autonomous vehicles in real-life driving conditions because many sudden situations may occur that require the vehicles to make an adjustment to the operation of the vehicle almost instantaneously. Accordingly, more effective onboard control systems need to be developed to improve the applicability of autonomous vehicles in daily life.

### SUMMARY

Embodiments are provided for methods and systems implementing the methods for maneuvering a driving apparatus. The methods may include detecting a first object and a second object. In some embodiments, the methods may include detecting distance and/or angle information of the first and/or second objects. In some embodiments, the method may include detecting instruction and/or information provided by the first and/or second objects.

In some embodiments, the methods may include determining the first object to be at a first distance from the driving apparatus and at a first angle with respect to the driving apparatus. The method may also include determining the second object to be at a second distance from the driving apparatus and at a second angle with respect to the driving apparatus. The first angle and the second angle may be different.

In some embodiments, the methods may include retrieving, based on the detected first object, a second preprogrammed maneuver judgment for maneuvering the driving apparatus. The first maneuver judgment may be made based on the second maneuver judgment. In some embodiments, the methods may further include retrieving, based on the detected second object, a third preprogrammed maneuver judgment for maneuvering the driving apparatus. The first maneuver judgment may be made based on at least one of the second maneuver judgment or the third maneuver judgment.

In some embodiments, the methods may further include detecting a third object at a third distance from the driving apparatus and at a third angle with respect to the driving apparatus. The methods may include retrieving, based on the detected third object, a fourth preprogrammed maneuver judgment for maneuvering the driving apparatus. The first maneuver judgment may be made based on at least one of the second maneuver judgment, the third maneuver judgment, or the fourth maneuver judgment.

In some embodiments, the determined first maneuver judgment, the preprogrammed second maneuver judgment, the preprogrammed third maneuver judgment, and/or the preprogrammed fourth maneuver judgment may include information on adjusting at least one of a travel speed or a travel direction of the driving apparatus.

In some embodiments, by making a maneuver judgment based on preprogrammed maneuver judgments associated with one or more of the objects detected, the methods may allow for maneuvering of the driving apparatus such that the driving apparatus may avoid the one or more objects detected. In some embodiments, the maneuver judgment determined based on one or more preprogrammed maneuver judgments may allow the driving apparatus to follow or utilize instructions and/or information provided by the first and/or second objects.

Other objects and advantages of the invention will be apparent to those skilled in the art based on the following drawings and detailed description.

### BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 illustrates an exemplary driving apparatus equipped with an onboard control system for maneuvering the driving apparatus in accordance with the disclosure.
FIG. 2 illustrates an exemplary obstacle monitoring system a driving apparatus may be equipped with in accordance with the disclosure.
FIGS. 3A, 3B, and 3C illustrate exemplary relationships between various obstacle information detected and various characteristic values of the obstacles detected for maneuvering a driving apparatus in accordance with the disclosure.
FIG. 4 illustrates exemplary determination of additional characteristic values based on one or more characteristic values of an obstacle detected for maneuvering a driving apparatus in accordance with the disclosure.
FIGS. 5A and 5B illustrate an exemplary determination of preprogrammed maneuver judgments for maneuvering a driving apparatus in accordance with the disclosure.
FIG. 6 illustrates an exemplary situation where a maneuver judgment may be made for maneuvering a driving apparatus in accordance with the disclosure.
FIG. 7 illustrates another exemplary situation where a maneuver judgment may be made for maneuvering a driving apparatus in accordance with the disclosure.
FIG. 8 illustrates a further exemplary situation where a maneuver judgment may be made for maneuvering a driving apparatus in accordance with the disclosure.
FIG. 9 illustrates an exemplary method for maneuvering a driving apparatus in accordance with the disclosure.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

Various specific embodiments of the present disclosure will be described below with reference to the accompanying drawings constituting a part of this specification. It should be understood that, although structural parts and components of various examples of the present disclosure are described by using terms expressing directions, e.g., "front", "back", "upper", "lower", "left", "right" and the like in the present disclosure, these terms are merely used for the purpose of convenient description and are determined on the basis of exemplary directions displayed in the accompanying drawings. Since the embodiments disclosed by the present disclosure may be set according to different directions, these terms expressing directions are merely used for describing rather than limiting. Under possible conditions, identical or similar reference numbers used in the present disclosure indicate identical components.

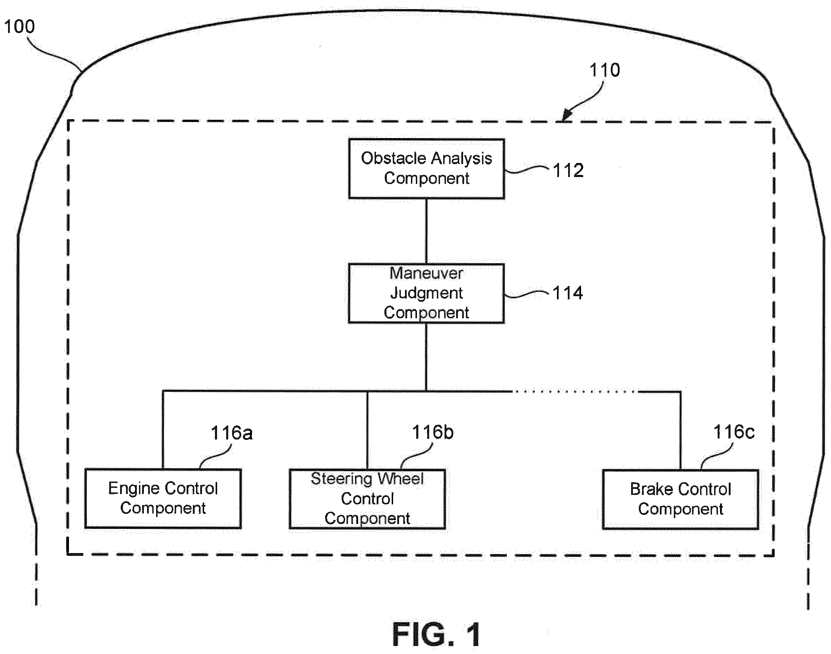

**FIG. 1** illustrates an exemplary driving apparatus 100 equipped with an onboard control system 110 for maneuvering the driving apparatus 100 in accordance with the disclosure. The driving apparatus 100 may include any driving apparatus that moves in distance. Examples of driving apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In some embodiments, the driving apparatus 100 may include an autonomous driving apparatus that may be fully maneuvered by the onboard control system 110. In some embodiments, the driving apparatus 100 may be operated by a human operator. The onboard control system 110 described herein may assist the human operator in maneuvering the driving apparatus in situations where the human operator may lose his/her driving capability, such as when experiencing a seizure, or where the human operator may lose focus due to distraction or fatigue, or where the human operator may simply not be able to react quickly enough to sudden situations.

As shown in FIG. 1, the onboard control system 110 may include an obstacle analysis component 112 for gathering and analyzing information related to obstacles the driving apparatus 100 may encounter during operation. The obstacles may include objects that the driving apparatus 100 may need to go around or avoid, such as parked vehicles, persons, bicycles, animals, or any objects obstructing the passage of the driving apparatus 100. The obstacles may further include road signs that the driving apparatus 100 may need to follow, such as stop signs, yield signs, turning signs, speed limit, and so on. The obstacles may further include information signs that the driving apparatus 100 may need to process, such as charging station signs, rest stop signs, and so on. The obstacles may further include situations that may affect the travel route of the driving apparatus 100, such as road construction, accidents, traffic jams, and so on. Therefore, the term obstacle is used herein to refer to any object or situation that may trigger a maneuver adjustment to the operation of the driving apparatus 100.

The onboard control system 110 may further include a maneuver judgment component 114 operatively coupled with the obstacle analysis component 112 for receiving from the obstacle analysis component 112 information and analysis related to obstacles the driving apparatus 100 encounters. The onboard control system 110 may further include one or more control components 116, such as an engine control component 116a, a steering wheel control component 116b, a break control component 116c, each of which may be operatively coupled with the maneuver judgment component 114 to receive one or more maneuver judgments for maneuvering the driving apparatus 100. Although FIG. 1 only illustrates the engine control component 116a, the steering wheel control component 116b, and the break control component 116c, the onboard control system 110 may further include additional control components 116 for controlling the operation of the vehicle, such as air bag control component, heating and cooling control component, window control component, and so on. Based on the analysis received from the obstacle analysis component 112, the maneuver judgment component 114 may make one or more maneuver judgments for maneuvering the driving apparatus 100. The maneuver judgment component 114 may then communicate the one or more maneuver judgments to the appropriate control components 116 for making adjustments to the operation of the driving apparatus 100.

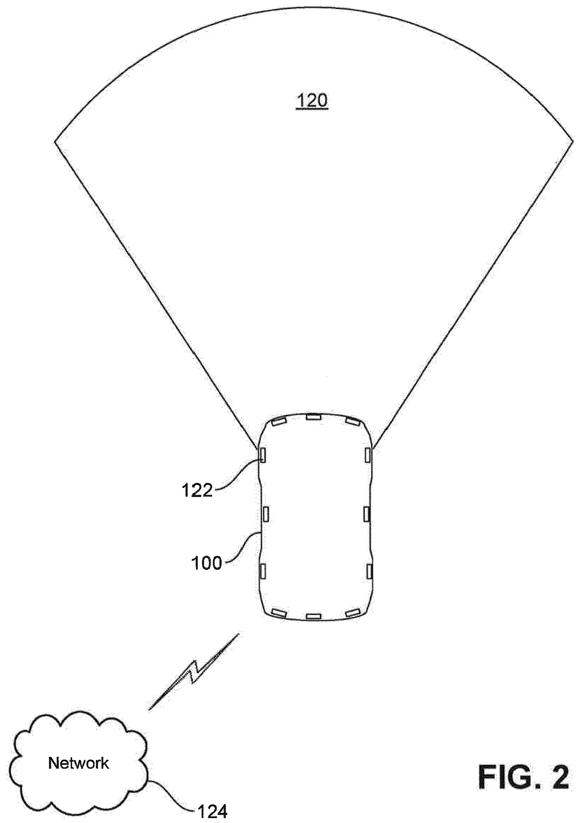

When the driving apparatus 100 is moving or about to move, whether moving forward, backward, or turning, the obstacle analysis component 112 may receive and analyze obstacle information related to obstacles coming into a detection zone of the driving apparatus 100 such that a determination can be made as to whether the maneuvering of the driving apparatus 100 may be adjusted. With reference to **FIG. 2****,** a detection zone 120 of the driving apparatus 100 may be an area surrounding or leading the driving apparatus 100 within which the driving apparatus 100 may monitor obstacles to determine whether the driving apparatus 100 may continue traveling along a path it has been traveling without any maneuver adjustment. The detection zone 120 leading the driving apparatus 100 may refer to any area that the driving apparatus 100 may move into by moving forward, backward, or turning. Therefore, the detection zone 120 may include an area leading a front portion of the vehicle, leading a back portion of the vehicle, leading a side portion of the vehicle, leading a combination of the front, side, and/or back of the vehicle, and so on. Although FIG. 2 illustrates a detection zone 120 that may be substantially pie-shaped, the detection zone 120 may be of any shape. Further, the detection zone 120 may not be limited to an area leading the driving apparatus 100, but may include an area surrounding the driving apparatus 100 all 360 degrees. This way, the driving apparatus 100 may not only make appropriate maneuver adjustments as it moves close to any obstacles, the driving apparatus 100 may also make maneuver adjustments if any obstacle moves toward the driving apparatus 100 from the side or back of the driving apparatus 100 unexpectedly.

The detection zone 120 may be predetermined or dynamically determined based on parameters intrinsic and/or extrinsic to the driving apparatus 100. Parameters intrinsic to the driving apparatus 100 may include a travel direction (e.g., forward, backward, turning, etc.) of the driving apparatus 100, ab travel speed of the driving apparatus 100, size of the driving apparatus 100, and so on. Parameters extrinsic to the driving apparatus 100 may include road conditions, weather conditions, and so on. For example, parameters related to road conditions may include whether the road is an asphalt road, a concrete path, a dirt path, a sandy path, and so on. Parameters related to weather conditions may include whether it is sunny, snowing, raining, foggy, and so on.

The obstacle analysis component 112 may receive obstacle information related to obstacles in the detection zone 120 of the driving apparatus 100 from one or more sensors 122 equipped on the driving apparatus 100. The sensors 122 may include imaging sensors, motion sensors, sound sensors, thermal sensors, color sensors, and so on. Although FIG. 2 illustrates sensors 122 positioned along a periphery of the driving apparatus 100, this is not intended to be limiting. The driving apparatus 100 may be equipped with sensors 122 on or near the top of the driving apparatus 100, at or near the bottom of the driving apparatus 100, inside the driving apparatus 100, or at any suitable part of the driving apparatus 100.

The obstacle analysis component 112 may also receive obstacle information by communicating with a network 124. The network 124 may provide information on any of the obstacles as discussed above. For example, the network 124 may include a traffic or road condition network that may broadcast information on traffic and/or road conditions, such as traffic jams, accidents, roadside constructions, and so on. Alternatively, the onboard control system 110 may be preprogrammed with road and/or traffic maps, such as road and/or traffic signs. When the obstacle analysis component 112 receives obstacle information from the network 124, the detection zone 120 may be expanded given that the network 124 may gather information beyond the detection capabilities of the sensors 122 on the driving apparatus 100. Therefore, the detection zone 120 may encompass an area corresponding to a portion or the entire coverage zone of the network 124.

Depending on the obstacle detected, the obstacle information received by the obstacle analysis component 112 may vary. For example, if the detected obstacle is an object that may obstruct the passage of the driving apparatus 100, then the obstacle information may include a distance of the obstacle from the driving apparatus 100, an angle at which the obstacle is positioned with respect to the driving apparatus 100, a direction of movement of the obstacle if the obstacle is moving, moving speed of the obstacle, a shape and/or size of the obstacle, and so on. The types of obstacles and corresponding information the obstacle analysis component 112 may detect and gather as described herein are not intended to be limiting. More or less information may be detected and gathered by the obstacle analysis component 112.

The obstacle analysis component 112 may process and analyze the obstacle information received before communicating the obstacle information to the maneuver judgment component 114. The maneuver judgment component 114 may then make a determination as to whether an adjustment to the maneuvering of the driving apparatus 100 may be made based on the obstacle information received. To improve the processing speed of obstacle information by the maneuver judgment component 114 and thereby reduce the overall reaction time of the driving apparatus 100 to an obstacle detected, instead of communicating the exact value of the obstacle information to the maneuver judgment component 114, the obstacle analysis component 112 may process the exact values of the obstacle information into characteristic values (discussed in more detail below) for outputting to the maneuver judgment component 114.

For example, in some embodiments, the obstacle analysis component 112 may process position information of the obstacle detected into a predetermined set of position characteristic values. The position information of the obstacle detected may include a distance of the obstacle from the driving apparatus 100. Accordingly, the position characteristic values may include a predetermined set of distance characteristic values which may include "very close," "close," "medium," "far," "very far," and such. The distance characteristic values may be determined by comparing the detected distance of the obstacle with a predetermined set of range values. Each of the predetermined set of range values may correspond to a characteristic value. For example, the predetermined set of range values may include 0 to 5 yards (corresponding to the distance characteristic value of "very close"), 5 to 15 yards (corresponding to the distance characteristic value of "close"), 15 to 20 yards (corresponding to the distance characteristic value of "medium"), 20 to 30 yards (corresponding to the distance characteristic value of "far"), over 35 yards (corresponding to the distance characteristic value of "very far"), and so on. The numbers of the ranges and the characteristic values listed herein are illustrative and not intended to be limiting. Other ranges may be selected in various embodiments. If the detected distance of the obstacle falls within a particular range, then the obstacle analysis component 112 may assign the corresponding characteristic values to the obstacle detected.

In some embodiments, the ranges may overlap, and there may be more than one characteristic value associated with one obstacle detected. Therefore, in addition to assigning one or more width characteristic values to an obstacle detected, the obstacle analysis component 112 may further assign to the obstacle a degree value ranging from 0 to 1 for each of the width characteristic values assigned. The degree value may indicate a degree of a particular width characteristic the detected obstacle may possess.

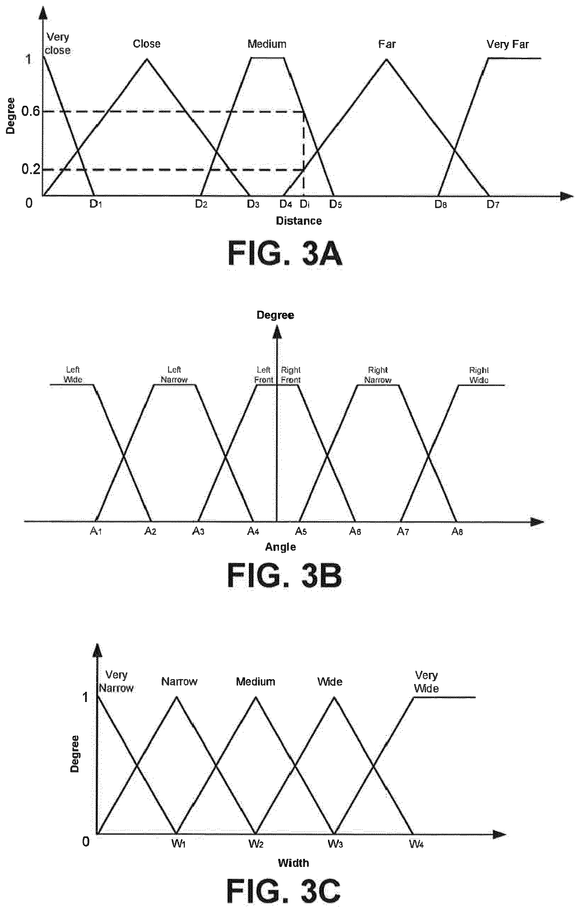

**FIG. 3A** illustrates an exemplary relationship between the degree value, the distance characteristic value, and the detected distance value of an obstacle. FIG. 3A is not intended to be limiting, and the relationship between the detected values, the degree values and the characteristic values may be linear or nonlinear, symmetrical or asymmetrical, and so on. As shown in FIG. 3A, for example, for a detected distance value Dᵢ of the obstacle, the obstacle analysis component 112 may assign both the distance characteristic value of "medium" and the characteristic value of "far" to the obstacle detected because the detected distance value Dᵢ falls within the range between D₄ and D₅. In addition, the obstacle analysis component 112 may further assign a degree value of 0.6 associated with the characteristic value of "medium" to the obstacle and may assign a degree value of 0.2 associated with the characteristic value of "far" to the obstacle. The maneuver judgment component 114 may utilize one or more of the distance characteristic values and degree values to make a determination whether an adjustment to the maneuvering of the driving apparatus 100 may be needed (discussed in more detail below).

In some embodiments, the position information of the obstacle detected may further include angle information indicating an angle at which the obstacle is located with respect to the travel direction of the driving apparatus 100. Accordingly, the position characteristic values may include a predetermined set of angle characteristic values. The obstacle analysis component 112 may process the angle information into one or more of the angle characteristic values. In some embodiments, the angle characteristic values may include "left wide," "left narrow," "left front," "right front," "right narrow," "right wide," and so on. The angle characteristic values may be determined by comparing the detected angle of the obstacle with a predetermined set of range values. Each of the predetermined set of range values may correspond to a characteristic value. For example, the predetermined set of range values may include over 60 degrees to the left of the travel direction of the driving apparatus 100 (corresponding to the angle characteristic value of "left wide"), 30 to 60 degrees to the left of the travel direction of the driving apparatus 100 (corresponding to the angle characteristic value of "left narrow"), 0 to 30 degrees to the left of the travel direction of the driving apparatus 100 (corresponding to the angle characteristic value of "left front"), 0 to 30 degrees to the right of the travel direction of the driving apparatus 100 (corresponding to the angle characteristic value of "right front"), 30 to 60 degrees to the right of the travel direction of the driving apparatus 100 (corresponding to the angle characteristic value of "right narrow"), over 60 degrees to the right of the travel direction of the driving apparatus 100 (corresponding to the angle characteristic value of "right wide"), and so on. The numbers of the ranges and the characteristic values listed herein are illustrative and are not intended to be limiting. Other ranges may be selected in various embodiments. If the detected angle of the obstacle falls within a particular range, then the obstacle analysis component 112 may assign the corresponding characteristic values to the obstacle detected.

In some embodiments, the ranges may overlap, and there may be more than one angle characteristic value associated with a detected angle value. Therefore, in addition to assigning one or more angle characteristic values to an obstacle detected, the obstacle analysis component 112 may further assign to the obstacle a degree value ranging from 0 to 1 for each of the angle characteristic values assigned. The degree value may indicate a degree of a particular angle characteristic the detected obstacle may possess. **FIG. 3B** illustrates an exemplary relationship between the degree value, the angle characteristic value, and the detected angle value of an obstacle. FIG. 3B is not intended to be limiting, and the relationship between the detected values, the degree values and the characteristic values may be linear or nonlinear, symmetrical or asymmetrical, and so on. The maneuver judgment component 114 may utilize one or more of the angle characteristic values and degree values to make a determination as to whether an adjustment to the maneuvering of the driving apparatus 100 may be needed (discussed in more detail below).

In some embodiments, the obstacle analysis component 112 may further process movement information of the obstacle into a predetermined set of movement characteristic values. The movement information of the obstacle detected may include a moving speed of the obstacle. Accordingly, the movement characteristic values may include a predetermined set of moving speed characteristic values. In some embodiments, the moving speed characteristic values may include "very fast," "fast," "medium," "slow," "very slow," and such. Upon receiving the detected speed of the obstacle, the obstacle analysis component 112 may assign one or more of the moving speed characteristic values to the obstacle similar to how the obstacle analysis component 112 may assign one or more of the above mentioned characteristic values to the obstacle (e.g., by comparing a detected speed value with a predetermined set of range values). In some embodiments, the ranges for determining the moving speed characteristic values may overlap. The obstacle analysis component 112 may further assign degree values associated with the moving speed characteristic values to the obstacle detected.

In some embodiments, the movement information of the obstacle detected may further include direction information indicating a direction toward which the obstacle is moving with respect to the driving apparatus 100. Accordingly, the movement characteristic values may include a predetermined set of direction characteristic values. The obstacle analysis component 112 may process the direction information into one or more of the direction characteristic values. In some embodiments, the direction characteristic values may include "moving away," "neutral," "moving close," and so on. The direction characteristic values may be determined by detecting whether the distance of the obstacle from the driving apparatus 100 is increasing or decreasing and/or whether the obstacle is moving toward or away from the travel path of the driving apparatus 100. If the distance of the obstacle from the driving apparatus 100 is increasing and/or the obstacle is moving away from the travel path of the driving apparatus 100, then the obstacle analysis component 112 may assign a direction characteristic value of "moving away" to the obstacle detected. If the distance of the obstacle from the driving apparatus 100 is decreasing and/or the obstacle is moving toward the travel path of the driving apparatus 100, then the obstacle analysis component 112 may assign a direction characteristic value of "moving close" to the obstacle detected. If a change in the distance of the obstacle from the driving apparatus 100 is less than a predetermined value within a certain period of time and/or the obstacle is neither moving away from or toward the travel path of the driving apparatus 100, then the obstacle analysis component 112 may assign a direction characteristic value of "neutral" to the obstacle detect. The direction characteristic values listed herein are illustrative and not intended to be limiting. Other values may be utilized and assigned to an obstacle detected in various embodiments.

In some embodiments, the obstacle analysis component 112 may further process shape information of the obstacle into a predetermined set of shape characteristic values. The shape information of the obstacle detected may include a width of the obstacle detected. Accordingly, the shape characteristic values may include a predetermined set of width characteristic values which may include "very narrow," "narrow," "medium," "wide," "very wide," and such. Upon receiving the detected width of the obstacle, the obstacle analysis component 112 may assign one or more of the width characteristic values to the obstacle similar to how the obstacle analysis component 112 may assign one or more of the distance and/or angle characteristic values to the obstacle as discussed above (e.g., by comparing a detected width value with a predetermined set of range values). For example, the predetermined set of range values may include 0 to 10 inches (corresponding to the width characteristic value of "very narrow"), 10 to 20 inches (corresponding to the width characteristic value of "narrow"), 20 to 30 inches (corresponding to the width characteristic value of "medium"), 30 to 40 inches (corresponding to the width characteristic value of "wide"), over 40 inches (corresponding to the width characteristic value of "very wide"), and so on. The numbers of the ranges and the characteristic values listed herein are illustrative and not intended to be limiting. Other ranges may be selected in various embodiments. If the detected width of the obstacle falls within a particular range, then the obstacle analysis component 112 may assign the corresponding characteristic values to the obstacle detected.

In some embodiments, the ranges for determining the width characteristic values may overlap. The obstacle analysis component 112 may then further assign degree values associated with the width characteristic values to the obstacle detected. **FIG. 3C** illustrates an exemplary relationship between the degree value, the width characteristic value, and the detected width value of an obstacle. FIG. 3C is not intended to be limiting, and the relationship between the detected values, the degree values and the characteristic values may be linear or nonlinear, symmetrical or asymmetrical, and so on. The maneuver judgment component 114 may utilize one or more of the characteristic values and degree values to make a determination whether an adjustment to the maneuvering of the driving apparatus 100 may be needed (discussed in more detail below).

The shape characteristic values may further include a predetermined set of height characteristic values which may include "very short," "short," "medium," "tall," "very tall," and such. The obstacle analysis component 112 may assign to a detected obstacle a height characteristic value based on the detected height value of the obstacle in a manner similar to how the obstacle analysis component 112 assign the width characteristic value as discussed above (e.g., by comparing a detected height value with a predetermined set of range values). The obstacle analysis component 112 may further assign to the detected obstacle a degree value associated with one or more of the height characteristic values similar to how the obstacle analysis component 112 may assign a degree value associated with one or more of the width characteristic values as discussed above. The shape characteristic values discussed herein are not intended to be limiting. Other shape characteristic values may be included for processing by the obstacle analysis component 112 and/or maneuver judgment component 114, such as the length or diameter of obstacle.

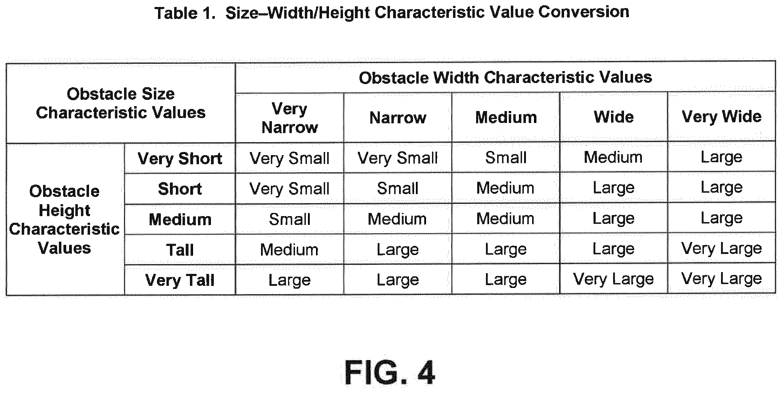

The obstacle analysis component 112 may further synthesize one or more of the shape characteristic values into a predetermined set of size characteristic values which may include "very small," "small," "medium," "large," "very large," and such. In some embodiments, the obstacle analysis component 112 may determine the size characteristic values based on Table 1 shown in **FIG. 4** which illustrates an exemplary determination of the size characteristic values based on the width and height characteristic values. The determination illustrated in Table 1 is not intended to be limiting. The size characteristic values may be determined differently in other embodiments. For example, the size characteristic values may be determined by taking into consideration the length, diameter, weight, and any other suitable properties of the obstacle.

Once the obstacle analysis component 112 finishes processing the obstacle information and converting the obstacle information into one or more characteristic values, the obstacle analysis component 112 may output the one or more characteristic values to the maneuver judgment component 114. The maneuver judgment component 114 may make a determination based on the one or more of received characteristic values whether the maneuvering of the driving apparatus 100 may be adjusted.

There are several advantages of processing the detected values of the obstacle information into characteristic values by the obstacle analysis component 112. First, there may be a great or even infinite number of detected values that may be associated with an obstacle for the maneuver judgment component 114 to process in order to make a maneuver determination. Such processing may not only require high computing capabilities of the maneuver judgment component 114, but may also require an exceedingly significant amount of processing time. Long processing times may limit the application of the onboard control system 110 and the driving apparatus 100 in real-life situations, where an obstacle may suddenly come into the detection zone 120 of the driving apparatus 100 and may require the driving apparatus 100 to respond by making a maneuver adjustment almost instantaneously. By processing the detected obstacle information into a limited number of predetermined characteristic values by the obstacle analysis component 112, there is only a limited sets of values for the maneuver judgment component 114 to process to make a quick determination as to whether a maneuver adjustment of the driving apparatus 100 may be necessary.

Second, because the characteristic values may be range based values, exact measurements of the obstacle may not be required and approximation may be sufficient. Therefore, high power (such as high resolution or high definition) of the sensors 122 for detecting the obstacles may not be required. For example, sensors, including radar, sonar, lidar, or similar surveying devices, may be utilized for detection and measurement of obstacle information instead of high resolution/definition cameras for image capturing, which may help reduce the overall cost of the driving apparatus 100. Additionally, image captured by cameras may require line-by-line or pixel-by-pixel processing, which may result in long processing times. On the other hand, measurements collected by radar, sonar, lidar, or similar surveying devices may be processed much faster. This may greatly enhance the applicability of the onboard control system 110 and the driving apparatus 100 in real-life situations, where obstacles may suddenly appear and may require an immediate judgment and maneuver adjustment to be made by the driving apparatus 100.

Third, given the reduced processing time and the capability to quickly respond to sudden situations, the maneuver judgment component 114 may process information related to multiple obstacles at the same time, thereby enable the driving apparatus 100 to make a maneuver adjustment in response to multiple obstacles detected. A further advantage associated with detecting, processing, and responding to multiple obstacles simultaneously may include reducing the overall number of maneuver adjustments the driving apparatus 100 may make. For example, if a vehicle can only detect and process one obstacle at a time, then after making a first maneuver adjustment by, e.g., turning left upon detection of a first obstacle, the vehicle may be required to turn right upon detection of a second obstacle, which may result in too much swerving and cause discomfort or even danger to a passenger. However, if both the first and second obstacles may be detected and processed the same time, then the vehicle may only need to make one maneuver adjustment by, e.g., making a wider turn, thereby offer the passenger a more pleasant and safer riding experience.

Processing and responding to multiple obstacles simultaneously may be facilitated by preprogram the maneuver judgment component 114 with a number of predetermined maneuver judgments. Each of the preprogrammed maneuver judgments may correspond to one or more of the predetermined characteristic values. When the maneuver judgment component 114 receives from the obstacle analysis component 112 one or more characteristic values associated with each obstacle detected, the maneuver judgment component 114 may retrieve a preprogrammed maneuver judgment for each obstacle detected. Based on the preprogrammed maneuver judgments retrieved for the multiple obstacles detected, the maneuver judgment component 114 may make a combined maneuver judgment for making an adjustment to the maneuvering of the driving apparatus 100. Alternatively, the obstacle analysis component 112 and/or the maneuver judgment component 114 may combine the characteristic values of the multiple obstacles detected to obtain a synthesized characteristic value, then the maneuver judgment component 114 may retrieve a preprogrammed maneuver judgment based on the synthesized characteristic value for maneuvering the driving apparatus 100.

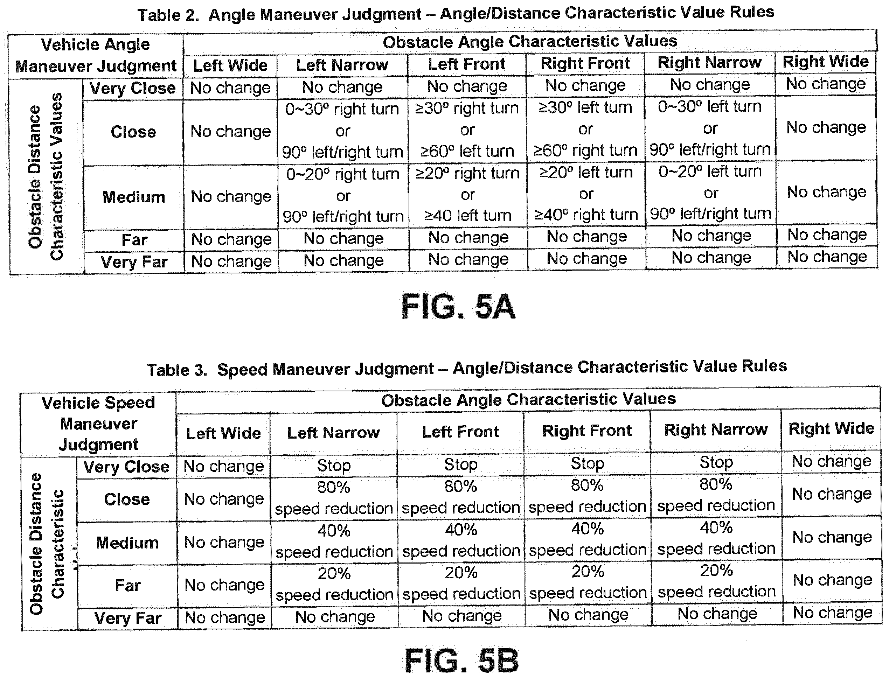

With reference to **FIGS. 5A** and **5B****,** exemplary preprogrammed maneuver judgments that the maneuver judgment component 114 may retrieve for making an adjustment to the maneuvering of the driving apparatus 100 will be explained. The preprogrammed maneuver judgments may include information or instructions on how the control components 116 of the driving apparatus 100 may utilize to adjust a travel direction (or travel path) and/or a travel speed of the driving apparatus 100. The preprogrammed maneuver judgments for making adjustment to the travel direction of the driving apparatus 100 may be referred to as preprogrammed angle maneuver judgments. The preprogrammed maneuver judgments for making adjustment to the travel speed of the driving apparatus 100 may be referred to as preprogrammed speed maneuver judgments.

Table 2 of FIG. 5A illustrates exemplary rules for determining preprogrammed angle maneuver judgments that the maneuver judgment component 114 may retrieve for making a maneuver adjustment to the travel direction of the driving apparatus 100. In some embodiments, the preprogrammed angle maneuver judgment may be determined based on the angle characteristic values and the distance characteristic values of an obstacle detected. For example, if the angle characteristic value of the obstacle is determined to be "left wide" or "right wide," then the preprogrammed angle maneuver judgment for the driving apparatus 100 may be "no change," which means no adjustment to the travel direction of the driving apparatus 100 need be made for the driving apparatus 100 to avoid the obstacle. If the angle characteristic value of the obstacle is determined to be "left narrow," "left front," "right front," or "right narrow," and the distance characteristic value of the obstacle is determined to be "very close," then the maneuver judgment for the driving apparatus 100 may also be "no change," because mere adjustment to the travel direction of the driving apparatus 100 may not be sufficient or safe enough for the driving apparatus 100 to avoid the obstacle. As will be discussed later, the driving apparatus 100 may be fully stopped to avoid the obstacle detected. Table 2 further lists other preprogrammed angle maneuver judgments for the driving apparatus 100 for various combinations of the detected obstacle's angle and distance characteristic values, which may include making a left or right turn by at least 20, 30, 40, or 60 degrees, or any other suitable degrees of turns. Making such a turn may position the obstacle at a different angle with respect to the driving apparatus 100 which may further change the angle characteristic value of the obstacle to become "left wide" or "right wide," thereby allow the driving apparatus 100 to avoid the obstacle. The preprogrammed maneuver judgments listed in Table 2 are not intended to be limiting. Other preprogrammed angle maneuver judgments may be utilized. For example, the preprogrammed maneuver judgments may include adjustment to the travel direction of the driving apparatus 100 even when the angle characteristic value of the obstacle may be determined to be "left wide" or "right wide."

In some embodiments, the maneuver judgment component 114 may be further preprogrammed with maneuver judgments for adjusting the travel speed of the driving apparatus 100. Table 3 of FIG. 5B illustrates exemplary rules for determining preprogrammed speed maneuver judgments that the maneuver judgment component 114 may retrieve for making a maneuver adjustment to the travel speed of the driving apparatus 100. In some embodiments, the preprogrammed speed maneuver judgment may be determined based on the angle characteristic values and the distance characteristic values of the obstacle detected. For example, if the angle characteristic value of the obstacle is determined to be "left wide" or "right wide," or the distance characteristic value of the obstacle is determined to be "very far," then the preprogrammed speed maneuver judgment for the driving apparatus 100 may be "no change," which means no adjustment to the travel speed of the driving apparatus 100 need be made for the driving apparatus 100 to avoid the obstacle. If the angle characteristic value of the obstacle is determined to be "left narrow," "left front," "right front," or "right narrow," and the distance characteristic value of the obstacle is determined to be "very close," then the maneuver judgment for the driving apparatus 100 may be "stop" for the driving apparatus 100 to avoid the obstacle. If the angle characteristic value of the obstacle is determined to be "left narrow," "left front," "right front," or "right narrow," and the distance characteristic value of the obstacle is determined to be "close," "medium," or "far," then the maneuver judgment for the driving apparatus 100 may be a reduction in the travel speed of the driving apparatus 100, such as "80% speed reduction" for the distance characteristic value of "close," "40% speed reduction" for the distance characteristic value of "medium," and "20% speed reduction" for the distance characteristic value of "far." The travel speed of the driving apparatus 100 may be reduced by any other suitable percentages.

The preprogrammed maneuver judgments listed in Table 3 are not intended to be limiting. Other preprogrammed speed maneuver judgments may be utilized. For example, the preprogrammed maneuver judgments may include adjustment to the travel speed of the driving apparatus 100 even when the angle characteristic value of the obstacle may be determined to be "left wide" or "right wide," or the distance characteristic value of the obstacle may be determined to be "very far." The speed maneuver judgment may include reducing the travel speed of the driving apparatus 100 by a variable range. Therefore, instead of reducing the travel speed of the driving apparatus 100 by 80%, 40%, or 20%, the preprogrammed speed maneuver judgment may include reducing the travel speed of the driving apparatus 100 by at least 80%, at least 40%, or at least 20%, or any other suitable range.

The preprogrammed maneuver judgments may further take into consideration other characteristic values of the obstacle, such as one or more of the shape characteristic values (e.g., height, width, and/or length characteristic values), the size characteristic values, the moving speed characteristic values, and/or the moving direction characteristic values of each obstacle detected. For example, the exemplary rules illustrated in Table 2 and Table 3 may be modified to include one or more of the shape, size, moving speed, and/or moving direction characteristic values as one of the conditions to reach certain maneuver judgments. Alternatively, the maneuver judgment component 114 may use one or more of the shape, size, moving speed, and/or moving direction characteristic values to modify one or both of the angle or distance characteristic values of the obstacle detected. Then, utilizing the modified angle and/or distance characteristic values of the obstacle, the maneuver judgment component 114 may refer to the rules as illustrated in Tables 2 and 3 to retrieve the angle and/or speed maneuver judgments for the driving apparatus 100.

In some embodiments, the size characteristic value of an obstacle may be utilized by the obstacle analysis component 112 and/or the maneuver judgment component 114 to modify the angle and/or distance characteristic values of the obstacle. For example, if the size characteristic value of the obstacle is determined to be "large" or "very large," then the maneuver judgment component 114 may modify the angle characteristic value of the obstacle from "left/right wide" to "left/right narrow," or even to "left/right front." If the size characteristic value of the obstacle is determined to be "very small," "small," or "medium," then the maneuver judgment component 114 may not modify the angle characteristic value of the obstacle. The maneuver judgment component 114 may further modify the determined distance characteristic value of the obstacle based on the size characteristic value of the obstacle in a similar manner. For example, if the size characteristic value of the obstacle is determined to be "large" or "very large," then the maneuver judgment component 114 may modify the distance characteristic value of the obstacle from "very far," "far," or "medium" to "close" or even "very close." If the size characteristic value of the obstacle is determined to be "very small," "small," or "medium," then the maneuver judgment component 114 may not modify the distance characteristic value of the obstacle. One or more of the shape characteristic values (e.g., height, width, and/or length characteristic values) may be utilized in a similar manner by the obstacle analysis component 112 and/or maneuver judgment component 114 to modify the angle and/or distance characteristic values of the obstacle in a similar manner as well.

In some embodiments, the moving speed and/or the moving direction characteristic values of an obstacle may be also be utilized to modify the angle and/or distance characteristic values of the obstacle. For example, if the moving speed characteristic value is determined to be "fast" or "very fast," or the moving direction characteristic value is determined to be "moving close," then the maneuver judgment component 114 may modify the angle characteristic value of the obstacle from "left/right wide" to "left/right narrow," or even to "left/right front," and/or may modify the distance characteristic value from "very far," "far," or "medium" to "close" or even "very close."

The various modifications discussed herein are not meant to be limiting. Other modification rules may be utilized. Further, although examples are discussed for modifying the angle and/or distance characteristic values of the obstacles based on the shape, size, moving speed, and/or moving direction characteristic values of the obstacle, any one or more of the characteristic values may be used to modify the other one or more characteristic values so that the maneuver judgment component 114 may utilized the modified characteristic values for retrieving a preprogrammed maneuver judgment.

As discussed earlier, in some embodiments, one obstacle may be assigned more than one characteristic value by the obstacle analysis component 112 in the same category and a degree value associated with each of the characteristic values (see discussion above with reference to FIGS. 3A-3C). As such, based on similar rules as illustrated in Tables 2 and 3, the maneuver judgment component 114 may retrieve more than one maneuver judgment with each maneuver judgment retrieved having a degree value related to the degree values associated with each of the characteristic values.

For example, referring back to FIGS. 3A, an obstacle is determined to be at a distance that may be assigned a distance characteristic value of "medium" with a degree value of 0.6 as well as a distance characteristic value of "far" with a degree value of 0.2. In some embodiments, the maneuver judgment component 114 may ignore one of the characteristic values if the difference between the degree values is greater than a predetermined value, such as 0.5. In some embodiments, the maneuver judgment component 114 may always consider all characteristic values received regardless of the associated degree values.

Assuming the maneuver judgment component 114 may be configured to consider all characteristic values received, then referring to Table 3, the maneuver judgment component 114 may retrieve two speed maneuver judgments for the driving apparatus 100, with one being "40% speed reduction" with a degree value of 0.6 (corresponding to the degree value for the "medium" distance characteristic value of the obstacle) and the other being "20% speed reduction" with a degree value of 0.2 (corresponding to the degree value for the "far" distance characteristic value of the obstacle). The maneuver judgment component 114 may synthesize the two maneuver judgments retrieved to obtain one maneuver judgment for outputting to one of the control components 116. In some embodiments, the maneuver judgment component 114 may weigh the retrieved the maneuver judgments based on their associated degree values and obtain a weighted maneuver judgment. Thus, for the "40% speed reduction" maneuver judgment having a degree value of 0.6 and the "20% speed reduction" maneuver judgment having a degree value of 0.2, the maneuver judgment component 114 may reach a weighted maneuver judgment of "35% speed reduction." Any other suitable methods may be utilized for the maneuver judgment component 114 to synthesize the multiple characteristic values to reach one maneuver judgment. Although the above example is discussed with reference to the distance characteristic values of the obstacle and the speed maneuver judgments for the driving apparatus 100, similar principles may be applied when the maneuver judgment component 114 receives multiple angle, shape, and/or size characteristic values with varied degree values from the obstacle analysis component 112.

It should be understood that although certain functions are described as performed by one of the obstacle analysis component 112 or the maneuver judgment component 114, one or more of those functions described may be performed by the other of the obstacle analysis component 112 or the maneuver judgment component 114. Further, although obstacle analysis component 112 and maneuver judgment component 114 are described as separate components for ease of description, they may be one integrated component that may perform all functions of the obstacle analysis component 112 and the maneuver judgment component 114 as discussed above.

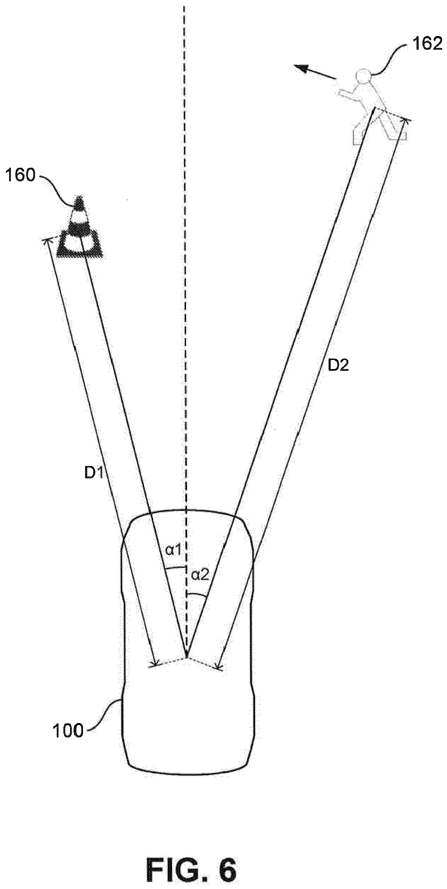

Attention is now directed to **FIG. 6****,** which illustrates an exemplary situation where the driving apparatus 100 equipped with the onboard control system 110 may make a maneuver adjustment when more than one obstacle may be detected. As shown, the driving apparatus 100 may detect a first obstacle 160 through one of the sensors 122 equipped on the driving apparatus 100 and/or the network 124 as discussed earlier with reference to FIG. 2. The first obstacle 160 may be a non-moving obstacle, such as a traffic cone, rock, parked vehicle, and such. The driving apparatus 100 may further detect a second obstacle 162. The second obstacle 162 may be a moving obstacle, such as a moving vehicle, a running child, and such, a moving direction of which is indicated by an arrow leading the second obstacle 162.

Upon detection of the first and second obstacles 160, 162, the obstacle analysis component 112 may receive one or more of detected position information, movement information, and/or shape information of the first and second obstacles 160, 162. For example, the obstacle analysis component 112 may receive a detected distance value of the first obstacle 160 indicating that the first obstacle 160 may be located at a distance of D1 from the driving apparatus 100. The obstacle analysis component 112 may further receive a detected angle value of the first obstacle 160 indicating that the first obstacle 160 may be positioned at an angle of α1 with respect to a travel direction or travel path of the driving apparatus 100 which is indicated by a dash line in FIG. 5. Similarly, the obstacle analysis component 112 may receive a detected distance value indicating that the second obstacle 162 may be located at a distance of D2 from the driving apparatus 100. The obstacle analysis component 112 may also receive a detected angle value indicating that the second obstacle 162 may be positioned at an angle of α2 with respect to the travel direction of the driving apparatus 100. Further, the obstacle analysis component 112 may receive detected movement information of the second obstacle 162 indicating the moving direction and/or the moving speed of the second obstacle 162. The obstacle analysis component 112 may further receive detected shape information of the first and second obstacles 160, 162, such as the height and/or width of the first and second obstacles 160, 162.

Upon receiving the one or more detected values, the obstacle analysis component 112 may analyze and process these values into corresponding position, movement, and/or shape characteristic values using the processing and conversion methods discussed above. In some embodiments, the obstacle analysis component 112 may assign the first obstacle 160 one or more of the following characteristic values: a distance characteristic value of "close," an angle characteristic value of "left front," a width characteristic value of "narrow," a height characteristic value of "short," and/or a size characteristic value of "small," and so on. The obstacle analysis component 112 may assign the second obstacle 162 one or more of the following characteristic values: a distance characteristic value of "medium," an angle characteristic value of "right narrow," a width characteristic value of "narrow," a height characteristic value of "medium," a size characteristic value of "medium," a moving speed characteristic value of "fast," and/or a moving direction characteristic value of "moving close," and so on. Additionally, the obstacle analysis component 112 may modify some of the characteristic values for the second obstacle 162 given that the second obstacle 162 is determined to be "moving close" to the driving apparatus 100 "fast." Accordingly, the obstacle analysis component 112 may modify the distance characteristic value of the second obstacle 162 from "medium" to "close," and/or may modify the angle characteristic value of the second obstacle 162 from "right narrow" to "right front."

In some embodiments, the obstacle analysis component 112 may assign multiple characteristic values in the same category for the first and/or second obstacles 160, 162 and assign corresponding degree values to each of the characteristic values. For example, in addition to assign the angle characteristic value of "left front" to the first obstacle 160, the obstacle analysis component 112 may further assign the angle characteristic value of "left narrow" to the first obstacle 160. The obstacle analysis component 112 may further assign a degree value of 0.7 to the "left front" angle characteristic value and a degree value of 0.3 to the "left narrow" angle characteristic value. The obstacle analysis component 112 may also assign multiple angle characteristic values and associated degree values to the second obstacle 162. The obstacle analysis component 112 may further assign multiple distance, height, width, moving speed, and/or moving direction characteristic values and associated degree values to the first and second obstacles 160, 162. The obstacle analysis component 112 may then output the characteristic values and the associated degree values to the maneuver judgment component 114.

Upon receiving the characteristic values from the obstacle analysis component 112, the maneuver judgment component 114 may retrieve a first preprogrammed maneuver judgment based on the characteristic values of the first obstacle 160. For example, utilizing the preprogrammed rules in Table 2 and based on the received distance characteristic value of "close" and the received angle characteristic value of "left front" of the first obstacle 160, the maneuver judgment component 114 may retrieve the following preprogrammed angle maneuver judgment for the driving apparatus 100 to avoid the first obstacle 160: turning right by at least 30 or turning left by at least 60 degrees. Utilizing the preprogrammed rules in Table 3, the maneuver judgment component 114 may further retrieve the preprogrammed speed maneuver judgment of reducing the speed of the driving apparatus 100 by 80%.

Similarly, the maneuver judgment component 114 may retrieve a second maneuver judgment based on the characteristic values of the second obstacle 162 (e.g., the modified distance characteristic value of "close," the modified angle characteristic value of "right front," etc.). The retrieved second maneuver judgment may include the following: turning left by at least 30 or turning right by at least 60 as the angle maneuver judgment for the driving apparatus 100, and reducing the speed of the driving apparatus 100 by 80% as the speed maneuver judgment. The maneuver judgment component 114 may further taking into account other received characteristic values of the first and second obstacles 160, 162 and associated degree values, if applicable, in retrieving one or more of the preprogrammed maneuver judgments.

Once the maneuver judgment component 114 retrieves the first and second preprogrammed maneuver judgments for the first and second obstacles 160, 162, the maneuver judgment component 114 may determine one combined maneuver judgment based on the retrieved maneuver judgments. When combing multiple retrieved maneuver judgments, the maneuver judgment component 114 may determine an overlapping range as the combined maneuver judgment for making a maneuver adjustment to the driving apparatus 100. For example, with respect to the speed maneuver judgment for the driving apparatus 100, the maneuver judgment component 114 may determine the overlap range of the speed maneuver judgments retrieved for the first and second obstacles 160, 162. Accordingly, for the example as illustrated in FIG. 6, the maneuver judgment component 114 may determine the combined speed maneuver judgment for the driving apparatus 100 to include reducing the speed of the driving apparatus 100 by 80%.

Similarly, with respect to the angle maneuver judgment for the driving apparatus 100, the maneuver judgment component 114 may determine the overlap range of the angle maneuver judgments retrieved for the first and second obstacles 160, 162. Accordingly, for the example as illustrated in FIG. 6, the maneuver judgment component 114 may determine the combined angle maneuver judgment for the driving apparatus 100 to include turning left by at least 60 degrees or turning right by at least 60 degrees. In some embodiments, to determine which one of the multiple angle maneuver judgment to output to one or more of the control components 116, the maneuver judgment component 114 may further take into account the moving direction characteristic value of the obstacle detected such that the combined maneuver judgment would maneuver the driving apparatus 100 out of the moving trajectory of the obstacle. For example, in FIG. 6, because the second obstacle 162 has been assigned the "moving close" and "right narrow" characteristic values, the maneuver judgment component 114 may determine turning right by at least 60 degrees, rather than turning left by at least 60 degrees, to be the appropriate angle maneuver judgment.

Once the maneuver judgment component 114 determines the combined maneuver judgment, the maneuver judgment component 114 may output the combined maneuver judgment to one or more of the control components 116 for making a maneuver adjustment for the driving apparatus 100. For the example as illustrated in FIG. 6, the maneuver judgment component 114 may output the maneuver judgment of turning right by at least 60 degrees to the steering wheel control component 116b for maneuvering the driving apparatus 100 to make a right turn by at least 60 degrees. The maneuver judgment component 114 may further output the maneuver judgment of reducing the speed of the driving apparatus 100 by 80% to the engine control component 116a and/or the break control component 116c for maneuvering the driving apparatus 100 to slow down by 80%.

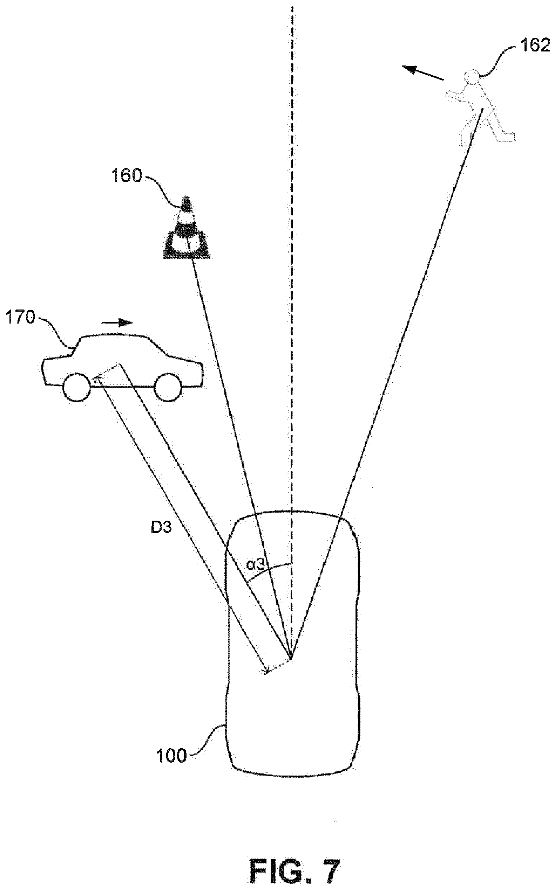

Attention is now directed to **FIG. 7****,** which illustrates another exemplary situation where the driving apparatus 100 equipped with the onboard control system 110 may make a maneuver adjustment when more than one obstacle may be detected. As illustrated in FIG. 7, the driving apparatus 100 may detect a third obstacle 170, in addition to the first and second obstacles 160, 162. The third obstacle 170 may be another moving obstacle, such as a moving vehicle, a running child, and such, a moving direction of which is indicated by an arrow above the third obstacle 170.

Upon detection of the third obstacle 170, the obstacle analysis component 112 may receive one or more of detected position information, movement information, and/or shape information of the third obstacle 170. The obstacle analysis component 112 may receive a detected distance value of third obstacle 170 indicating that the third obstacle 170 may be located at a distance of D3 from the driving apparatus 100. The obstacle analysis component 112 may further receive a detected angle value of the third obstacle 170 indicating that the third obstacle 170 may be positioned at an angle of α3 with respect to the travel direction of the driving apparatus 100. The obstacle analysis component 112 may further receive detected movement information of the third obstacle 170 indicating the moving direction and/or the moving speed of the third obstacle 170.

Upon receiving the one or more detected values, the obstacle analysis component 112 may analyze and process these values into corresponding characteristic values using the processing and conversion methods discussed above. In some embodiments, the obstacle analysis component 112 may assign the third obstacle 170 one or more of the following characteristic values: a distance characteristic value of "very close," an angle characteristic value of "left narrow," a width characteristic value of "wide," a height characteristic value of "medium," a size characteristic value of "large," a moving speed characteristic value of "very fast," and/or a moving direction characteristic value of "moving close," and so on. Additionally, the obstacle analysis component 112 may modify some of the characteristic values of the third obstacle 170 given that the third obstacle 170 is determined to be "moving close" to the driving apparatus 100 "very fast." Accordingly, the obstacle analysis component 112 may modify the angle characteristic value from "left narrow" to "left front." In some embodiments, the obstacle analysis component 112 may further assign multiple characteristic values in the same category for the third obstacle 170 and assign corresponding degrees to each of the characteristic values, similar to how the obstacle analysis component 112 may assign multiple characteristic values and degree values to the first and second obstacles 160, 162. The obstacle analysis component 112 may then output the characteristic values and the associated degree values to the maneuver judgment component 114. Upon receiving the characteristic values from the obstacle analysis component 112, the maneuver judgment component 114 may retrieve a third preprogrammed maneuver judgment based on the characteristic values of the third obstacle 170 utilizing the preprogrammed rules in Table 2. Given the distance characteristic value of "very close" and the modified angle characteristic value of "left front," the retrieved third maneuver judgment may include stopping the driving apparatus 100 to avoid the third obstacle 170.

When combing multiple retrieved maneuver judgments, the maneuver judgment component 114 may give priority to a stop maneuver judgment. In other words, when the maneuver judgment component 114 combines a maneuver judgment that may indicate the driving apparatus 100 should be stopped with other retrieved maneuver judgments, the resulting maneuver judgment may be consistent with the stop maneuver judgment. Accordingly, when the maneuver judgment component 114 combines the retrieved first, second, and third maneuver judgments, the resulting maneuver judgment may indicate the driving apparatus 100 should stop to avoid the first, second, and third obstacles 160, 162, 170. Then the maneuver judgment component 114 may output the stop maneuver judgment to one or more of the control components 116 so that the driving apparatus 100 may be controlled to stop.

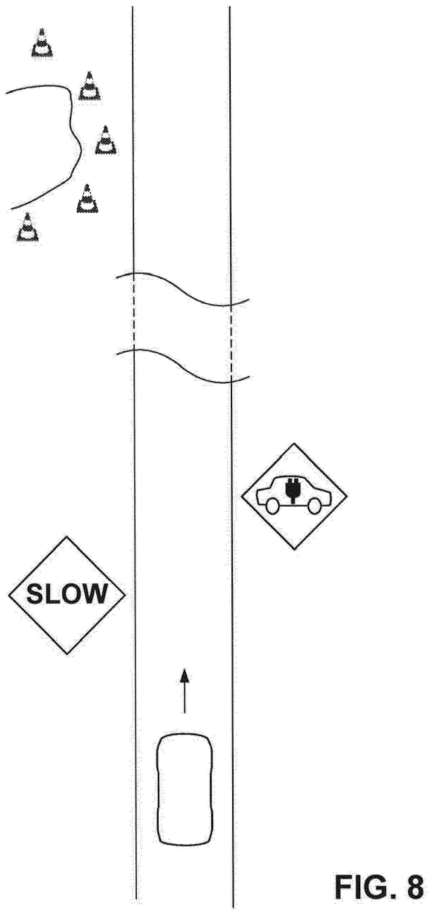

Attention is now directed to **FIG. 8****,** which illustrates a further exemplary situation where the driving apparatus 100 equipped with the onboard control system 110 may make a maneuver adjustment when more than one obstacle may be detected. As shown, the driving apparatus 100 may further detect and respond to obstacles that may be considered instructional or informational. Accordingly, instead of avoiding such obstacles, the onboard control system 110 may include preprogrammed maneuver judgments for the driving apparatus 100 to follow the instruction or to utilize the information provided by the obstacles.

As shown, the driving apparatus 100 may detect a fourth obstacle 180 that may be considered instructional. The driving apparatus 100 may detect the fourth obstacle 180 through one of the sensors 122 and/or the network 124. Alternatively, the onboard control system 110 may be preprogrammed with road and/or traffic maps which may include road and/or traffic signs. The fourth obstacle 180 may include a road sign, such as slow, stop, yield, turn right, turn left, or any other road and/or traffic signs, which may provide instructions that the driving apparatus 100 should follow. Accordingly, the onboard control system 110 may be preprogrammed with maneuver judgments that may be output to the control components 116 for maneuvering the driving apparatus 100 in accordance with the instructions provided by such road and/or traffic signs. For example, upon detection of the fourth obstacle 180, the maneuver judgment component 114 may retrieve a preprogrammed maneuver judgment for output to one or more of the control components 116 to slow down the driving apparatus 100.

As shown , the driving apparatus 100 may further detect a fifth obstacle 182 that may be considered informational. The driving apparatus 100 may detect the fifth obstacle 182 through one of the sensors 122, the network 124, and/or the preprogrammed road and/or traffic maps onboard the driving apparatus 100. The fifth obstacle 182 may include information on charging stations, rest stops, scenic areas, or any other points of interest that the driving apparatus 100 or passengers inside the driving apparatus 100 may find useful. Accordingly, the onboard control system 110 may be preprogrammed with maneuver judgments that may utilize such information for maneuvering the driving apparatus 100. For example, the onboard control system 110 may monitor the charge level of the driving apparatus 100. When the charge level falls below certain predetermined level, the maneuver judgment component 114 may output a maneuver judgment to the control components 116 of the driving apparatus 100 to follow the information provided by the fifth obstacle 182, which shows a charging station, so that the driving apparatus 100 can be recharged.

As shown , the driving apparatus 100 may further detect a sixth obstacle 184 that may also be considered informational. The sixth obstacle 184 may include a nearby obstacle that the sensors 122 of the driving apparatus 100 may detect. The sixth obstacle 184 may include a remote obstacle that may be beyond the detection range of the sensors 122, and the obstacle analysis component 112 may receive information on the sixth obstacle 184 through the network 124. As discussed earlier, the network 124 may include a traffic or road condition network that may broadcast information on traffic and/or road conditions, such as traffic jams, accidents, roadside constructions, and so on. The onboard control system 110 may be preprogrammed with maneuver judgment for the driving apparatus 100 to respond to such traffic and/or road conditions. For example, upon detection of the sixth obstacle 184, the maneuver judgment component 114 may retrieve a preprogrammed maneuver judgment to reroute the driving apparatus 100 to avoid any delay that may be caused by the sixth obstacle 184.

As illustrated in FIGS. 6, 7, and 8, the maneuver judgment component 114 may make maneuver judgments and the driving apparatus 100 may make maneuver adjustments at any given time. As the driving apparatus 100 may change its course of travel by making a maneuver adjustment, the obstacle analysis component 112 may continue to update the characteristic values of the obstacles detected and the maneuver judgment component 114 may continue to make appropriate maneuver judgment for maneuvering the driving apparatus 100.

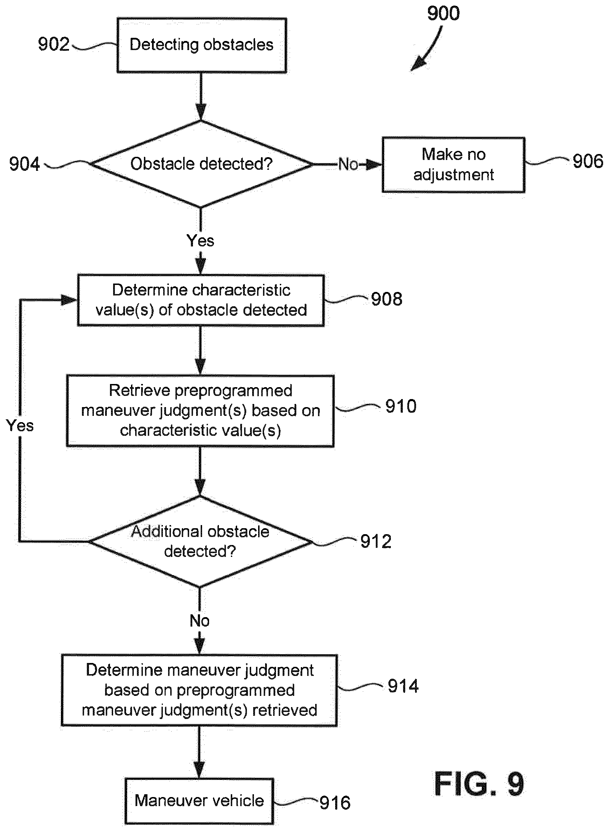

Attention is now directed to **FIG. 9** where an exemplary method for a driving apparatus to detect and respond to one or more obstacles is illustrated. The particular series of processing steps depicted in FIG. 9 is not intended to be limiting. It is appreciated that the processing steps may be performed in an order different from that depicted in FIG. 9 and that not all the steps depicted in FIG. 9 need be performed. In certain implementations, the method 900 may be implemented by an onboard control system in the driving apparatus, such as the onboard control system 110 described here. The onboard control system performing the method 900 may include an obstacle analysis component, a maneuver judgment component, and/or one or more control components similar to those of the onboard control system 110. The onboard control system may be preprogrammed with maneuver judgments for making an adjustment to the maneuvering of the driving apparatus.

At 902, obstacles around the driving apparatus may be monitored and/or detected such that the driving apparatus may avoid the obstacle detected or may follow the instruction and/or information detected. Such monitoring and/or detection may be performed by the obstacle analysis component of the onboard control system.

At 904, the onboard control system may make a determination as to whether an obstacle has been detected. For example, the onboard control system may determine whether an obstacle has moved into a detection zone of the driving apparatus utilizing one or more sensors equipped on the driving apparatus and/or information received from one or more networks, similar to how the driving apparatus 100 may detect an obstacle as discussed above with reference to FIG. 2.

If the onboard control system determines that no obstacle has been detected, then the onboard control system may, at 906, make no adjustments to the maneuvering of the driving apparatus. If the onboard control system determines that an obstacle has been detected, then the onboard control system may proceed to 908 to analyze the obstacle detected.

At 908, the onboard control system may analyze the obstacle detected similar to how the onboard control system 110 may process information of an obstacle detected as discussed above with reference to FIGS. 3 and 4. For example, the onboard control system may determine one or more characteristic values of the obstacle detected, such as shape, position, movement, and other characteristic values of the obstacle as discussed above. Such analysis and/or determination may be performed by the obstacle analysis component of the onboard control system.

At 910, the onboard control system may retrieve one or more preprogrammed maneuver judgments similar to how the onboard control system 110 may retrieve preprogrammed maneuver judgments as discussed above with reference to FIG. 5. For example, the onboard control system may retrieve preprogrammed angle and/or speed maneuver judgments for making an adjustment to the driving direction and/or driving speed of the driving apparatus. The retrieval of the preprogrammed maneuver judgments may be performed by the maneuver judgment component of the onboard control system.

At 912, the onboard control system may make a determination as to whether an additional obstacle has been detected. If the onboard control system determines that an additional obstacle has been detected, then the onboard control system may move to 908 to analyze the additional obstacle detected and may retrieve additional preprogrammed maneuver judgments at 910. If the onboard control system determines that no additional obstacle has been detected, then the onboard control system may proceed to 914.

At 914, the onboard control system may determine a maneuver judgment based on all preprogrammed maneuver judgments retrieved similar to how the onboard control system 110 may determine a combined maneuver judgment as discussed above with reference to FIGS. 6-8. The determination of the combined maneuver judgment for output to one or more control components may be performed by the maneuver judgment component of the onboard control system.

In some embodiments, the onboard control system of the driving apparatus may first determine if all additional obstacles have been detected before retrieving any preprogrammed maneuver judgment. Once the onboard control system determines that no additional obstacle has been detected, then the onboard control system may retrieve all preprogrammed maneuver judgments for all the obstacles detected, and then may determine a combined maneuver judgment based on the retrieved maneuver judgments.

At 916, the onboard control system may, based on the combined maneuver judgment, adjust the maneuvering of the driving apparatus similar to how the onboard control system 110 may adjust the maneuvering of the driving apparatus 100. The maneuver judgment component of the onboard control system may output the combined maneuver judgment to one or more of the control components of the driving apparatus. The one or more of the control components of the driving apparatus may adjust the driving direction and/or the driving speed of the driving apparatus such that the driving apparatus may avoid the obstacle detected and/or follow the instruction and/or information detected.

Generally, according to embodiments, the angles of objects with respect to the driving apparatus may be determined in relation to a reference line associated with the driving apparatus. For example, the reference line may be the longitudinal axis of the apparatus or the direction of travel of the driving apparatus. The angle of an object may be determined as the angle formed between the reference line and a line joining the object and a predetermined position associated with the driving apparatus. For example, the predetermined position may be located on the vehicle, and may also be located on the reference line. The predetermined position may, for example, be located in the middle of the vehicle.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A method for maneuvering a driving apparatus, comprising:
detecting a first object at a first distance from a driving apparatus and at a first angle with respect to the driving apparatus;
detecting a second object at a second distance from the driving apparatus and at a second angle with respect to the driving apparatus, wherein the first angle and the second angle are different; and
making, by an onboard control system for the driving apparatus, a first maneuver judgment to maneuver the driving apparatus based on at least one of the detected first object or the detected second object.

2. The method for maneuvering a driving apparatus of claim 1, further comprising:
retrieving, by the onboard control system, based on the detected first object, a second maneuver judgment for maneuvering the driving apparatus, wherein the second maneuver judgment is preprogrammed.

3. The method for maneuvering a driving apparatus of claim 2, further comprising:
retrieving, by the onboard control system, based on the detected second object, a third maneuver judgment for maneuvering the driving apparatus, wherein the third maneuver judgment is preprogrammed.

4. The method for maneuvering a driving apparatus of any of claims 2 or 3, wherein the first maneuver judgment is made based on the second maneuver judgment, or the method of claim 3 wherein the first maneuver judgment is based on the second maneuver judgment and the third maneuver judgment.

5. The method for maneuvering a driving apparatus of any preceding claim, wherein the first maneuver judgment includes adjusting at least one of a travel speed of the driving apparatus or a travel direction of the driving apparatus.

6. The method for maneuvering a driving apparatus of any preceding claim, further comprising:
detecting a third object at a third distance from the driving apparatus and at a third angle with respect to the driving apparatus.

7. The method for maneuvering a driving apparatus of claim 6, further comprising:
retrieving, by the onboard control system, based on the detected third object, a third maneuver judgment for maneuvering the driving apparatus, wherein the third maneuver judgment is preprogrammed.

8. The method for maneuvering a driving apparatus of claim 7, wherein the first maneuver judgment is made based on the third maneuver judgment.

9. An onboard control system for maneuvering a driving apparatus, comprising:
a receiver configured to receive information of a first object at a first distance from a driving apparatus and at a first angle with respect to the driving apparatus and to receive information of a second object at a second distance from the driving apparatus and at a second angle with respect to the driving apparatus, wherein the first angle and the second angle are different; and
a processer configured to make a first maneuver judgment to maneuver the driving apparatus based on at least one of the information of the first object or the information of the second object.

10. The onboard control system for maneuvering a driving apparatus of claim 9, wherein the processor is further configured to retrieve, based on the information of the first object, a second maneuver judgment for maneuvering the driving apparatus, wherein the second maneuver judgment is preprogrammed.

11. The onboard control system for maneuvering a driving apparatus of claim 10, wherein the processor is further configured to retrieve, based on the information of the second object, a third maneuver judgment for maneuvering the driving apparatus, wherein the third maneuver judgment is preprogrammed.

12. The onboard control system for maneuvering a driving apparatus of any of claims 10 or 11 wherein the processor is configured to make the first maneuver judgment based on the second maneuver judgment, or the onboard control system for maneuvering a driving apparatus of claim 11, wherein the processor is configured to make the first maneuver judgment based on the third maneuver judgment or based on the second maneuver judgment and the third maneuver judgment.

13. The onboard control system for maneuvering a driving apparatus of any of claims 9 to 12, wherein the processor is configured to, in making the first maneuver judgment, adjust at least one of a travel speed of the driving apparatus or a travel direction of the driving apparatus.

14. The onboard control system for maneuvering a driving apparatus of any of claims 9 to 13, wherein the receiver is further configured to receive information of a third object at a third distance from the driving apparatus and at a third angle with respect to the driving apparatus.

15. The onboard control system for maneuvering a driving apparatus of claim 14, wherein the processor is further configured to retrieve, based on the information of the third object, a third maneuver judgment for maneuvering the driving apparatus, wherein the third maneuver judgment is preprogrammed; and, optionally
wherein the processor is configured to make the first maneuver judgment based on the third maneuver judgment.
